# EUROPEAN PATENT APPLICATION

(11) **EP 0 904 996 A1**
(43) Date of publication of application: **31.03.1999**
(21) Application number: 98118355.1
(22) Date of filing: 28.09.1998
(51) Int. Cl.: B60R 25/04, F02P 11/04, F02P 1/08

(54) **An ignition system with an immobilization function for a motor vehicle with a magnetoelectric generator**

(30) Priority: 30.09.1997 IT TO970861
(71) Applicant: MAGNETI MARELLI S.p.A., 20145 Milano (IT)
(72) Inventor: Aussello, Mauro, 10138 Verolengo (Torino) (IT); Bagnuoli, Gualtiero, 10152 Torino (IT); Vigano, William, 15040 Lu Monferrato (Alessandria) (IT)
(74) Representative: Quinterno, Giuseppe

(57) **Abstract**

The ignition system comprises an ignition coil (9) connected to a plug (10), and a capacitive-discharge ignition circuit (11) connected to the coil (9) and having a supply input (11a) connected to an output (6) of the generator (1) and a control input (11b) connected to another, third output (7) of the generator (1) which supplies a signal indicative of the rate of rotation of the engine. An electronic processing and control unit (13) is connected to the control input (11b) of the ignition circuit (11) and to a device (18) for acquiring signals emitted by a transponder connected thereto. The control unit (13) is arranged to permit control and operation of the ignition circuit (11) in order to start the engine only if the signals received by the acquisition device (18) contain a predetermined code.

## Description

The present invention relates to an ignition system for a motor vehicle having a magnetoelectric generator, of the type defined in the introductory part of appended Claim 1.

The object of the invention is to provide an improved system which can also perform the function of immobilizing the motor vehicle for anti-theft purposes, and in which operation of the ignition system can be ensured even if the battery of the vehicle is damaged or accidentally disconnected after the engine has been started.

This and other objects are achieved according to the invention by a system the main characteristics of which are defined in appended Claim 1.

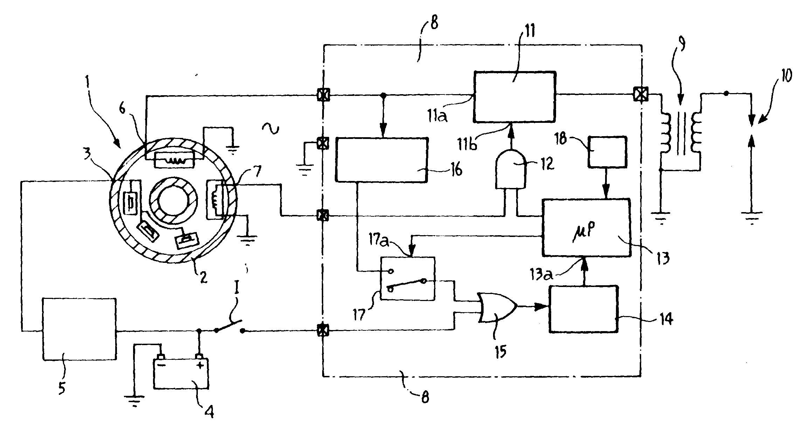

Further characteristics and advantages of the invention will become clear from the following detailed description, given purely by way of non-limiting example with reference to the appended drawing, which shows a diagram, partially in block form, of a system according to the invention.

In the drawing, a magnetoelectric generator of known type, generally indicated 1, is connected to the internal combustion engine of a motor vehicle (not shown).

In the embodiment shown, the generator 1 comprises a stator 2 with a three-phase output 3 connected to the positive pole of a battery 4 of the vehicle via a rectifier/voltage-regulator 5. The generator 1 also has a single-phase output 6 and a further output 7 at which it supplies a signal indicative of the rate of rotation of the engine, in operation.

The generator 1 and the battery 4 are connected to the inputs of an ignition-control module, generally indicated 8. This module has an output connected to an ignition coil 9, the secondary winding of which is connected to a spark plug 10.

The module 8 comprises a capacitive-discharge ignition circuit 11 of known type, the output of which is connected to the primary winding of the ignition coil 9. The circuit 11 has a supply input 11a and a control input 11b connected to the output 7 of the generator 1 via an enabling logic circuit 12.

The module 8 also comprises an electronic processing and control unit 13 arranged to perform a plurality of control functions, as will be explained further below.

This unit may be formed by a microprocessor.

The electronic unit 13 has a supply input 13a connected to the output of a main supply/regulator circuit 14 the input of which is connected to the positive pole of the battery 4 via an OR circuit 15 (and the ignition switch I).

The input of the supply/regulator circuit 14 is also connected to the output of a voltage pre-regulator 16 via a controlled electronic switch 17 and the OR circuit 15.

The input of the voltage pre-regulator circuit 16 is connected to the supply output 6 of the generator 1.

The controlled switch 17 has a control input 17a connected to an output of the electronic unit 13.

Also connected to this unit is a device 18 incorporated, for example, in the ignition and starting key of the motor vehicle for acquiring coded signals emitted by a transponder (not shown) connected thereto.

The system described above operates in the following manner.

When the engine is switched off and the ignition switch I is open, the module 8 receives no supply voltage. The switch 17 disconnects the output of the voltage pre-regulator 16 from the input of the supply/regulator device 14.

When the ignition switch I is closed by a key with a transponder, the supply/regulator receives at its input a supply voltage coming from the battery and supplies the processing and control unit 13. The latter acquires the code of the transponder by means of the device 18 and, having checked that the code is correct, enables the ignition circuit 11 by means of the circuit 12, allowing the motor vehicle to be started.

When the engine has been started, the unit 13 causes the switch 17 to switch so that it connects the supply/regulator 14 to the output of the pre-regulator 16. In this condition, even if the battery voltage 4 fails, the electronic unit 13 is nevertheless still supplied (by means of the supply/regulator 14 and the pre-regulator 16) with the voltage supplied by the generator 1 at its output 6.

When the engine is switched off the starting conditions are re-established.

Naturally, the principle of the invention remaining the same, the forms of embodiment and details of construction may be varied widely with respect to those described and illustrated purely by way of non-limiting example, without thereby departing from the scope of the invention as defined in the appended claim.

## Claims

1. An ignition system for a motor vehicle provided with a magnetoelectric generator (1) connected to the engine and having a first output (3) connected to a battery (4) by means of a voltage regulator (5), a second output (6) for supplying a supply voltage, and a third output (7) for supplying a signal indicative of the rate of rotation of the engine,
the ignition system comprising:
an ignition coil (9) connected to a plug (10),
a capacitive-discharge ignition circuit (11) connected to the coil (9) and having a supply input (11a) connected to the second output (6) of the generator (1) and a control input (11b) connected to the third output (7) of the generator (1),
an electronic processing and control unit (13) connected to the control input (11b) of the ignition circuit (11), and
a supply device (14) which can supply a supply voltage to the electronic unit (13) and which has an input connected to the output of a voltage pre-regulator (16), which in turn is connected to the second output (6) of the generator (1),
the system being characterized in that it further comprises:
a device (18) for acquiring signals emitted by a transponder connected thereto, the device (18) being connected to the processing and control unit (13),
an enabling device (12) interposed between the third output (7) of the generator (1) and the control input (11b) of the ignition circuit (11) and controlled by the electronic processing and control unit (13),
and in that the input of the supply device (14) can be connected to the battery (4) to enable the processing and control unit (13) to be supplied when the engine or generator is switched off, and is connected to the voltage pre-regulator (16) by means of a switch (17) controlled by the unit (13),
the unit (13) being arranged to cause the control and operation of the ignition circuit (11) to be permitted, by means of the enabling device (12), in order to start the engine, only if the signal received by the acquisition device (18) contains a predetermined code and, when the engine has been started, to cause the supply device (14) to be connected to the pre-regulator by means of the switch (17).
